# EUROPEAN PATENT APPLICATION

(11) **EP 3 754 084 A1**
(43) Date of publication of application: **23.12.2020**
(21) Application number: 20180887.0
(22) Date of filing: 18.06.2020
(51) Int. Cl.: D05B 11/00, B29C 65/08, B29C 65/00

(54) **JOINING MACHINE FOR JOINING PIECES OF FABRIC**

(30) Priority: 19.06.2019 IT 201900009438
(71) Applicant: Pugi Group S.r.L., 50013 Campi Bisenzio (FI) (IT)
(72) Inventor: PUGI, Alberto, 50041 Calenzano (FIRENZE) (IT)
(74) Representative: Firmati, Leonardo

(57) **Abstract**

Described is a machine for joining fabrics for joining an end flap (19b) of a first piece (19) of fabric to an initial end flap (20a) of a second piece (20) of fabric, comprising a frame (2), an upper track (8) supported by the frame (2) and extending longitudinally according to a first predetermined direction (D1), a lower track (10) supported by the frame (2) and extending parallel to the upper track (8), an operational joining head (9) slidably supported by the upper track (8), a contact element (11) of the operating head (9), acting in conjunction with it to determine the joining of the end flaps (19b, 20a), the contact element (11) being slidably supported by the lower track (10).

## Description

This invention relates to a joining machine for joining pieces of fabric. More specifically, the invention relates to a joining machine designed to connect a final end flap of a first piece of fabric with an initial end flap of a second piece of fabric.

In the processing of the fabrics it is common practice to join in succession a multiplicity of pieces or patches of fabric to form a very long continuous stretch, which is then wrapped in rolls or folded in a succession of layers. The formation of very long stretches of fabric constitutes in effect a considerable simplification into many steps of the treatment of the fabric, such as, for example, dyeing or printing or other finishing operations. Currently, the final end flap of a first piece is joined to the initial end flap of a second piece by stitching or heat sealing (according to the features and the material with which the fabric is made).

The machines used for the above-mentioned joint normally comprise a structure extending transversally relative to the direction of accumulation of the fabric, the structure having a track on which slides, actuated by the operator, a joining head operating on the above-mentioned two end flaps superposed beforehand on each other.

Operatively, the two pieces to be joined are both located on the same side of the joining machine since the continuous fabric supplied by their joining must be fed to a same processing station.

Since the fabric of both the pieces to be joined together have a first face and a second face, the joint must be such as to maintain for the fabric of the second piece the same orientation already adopted by that of the first piece. Since both the pieces are then advantageously on the same side of the joining machine, the respective ends are superposed for the connection with the respective first or second contact faces.

In other words, in order to maintain the same orientation of the fabric (for example, first face in an upper position and second face in a lower position) it is necessary to superpose the end flaps with the respective second contact faces.

In this way, however, the joint, regardless of whether it is stitching or heat sealing, will generate a sort of "irregularity" in the continuous fabric since the two flaps outside the stitching extend perpendicular to the continuous fabric.

In the subsequent winding into a roll of the continuous fabric, the "irregularity" will determine a circumferential stretch with a greater thickness, thereby generating an anomaly, even visual, in the succession of the layers of the roll.

This anomaly, although it can be clearly explained technically, implies a negative visual impact, for example when purchasing a fabric and as such should be limited or even eliminated.

The aim of the invention is to provide a machine for joining pieces of fabric which is able to overcome the above-mentioned drawbacks.

A further aim of the invention is to provide a machine for joining pieces of fabric which is at the same time effective and simple and inexpensive to make.

The technical features of the invention, with reference to the above aims, can be easily inferred from the appended claims, in particular claim 1, and, moreover, from any of the claims that depend, either directly or indirectly, on claim 1.

The advantages of the invention are more apparent from the detailed description which follows, with reference to the accompanying drawings which illustrate a preferred, non-limiting example embodiment of the invention and in which:
- Figure 1 is a schematic front elevation view of a preferred embodiment of the machine for joining pieces of fabric according to the invention;
- Figure 2 is a schematic top plan view of the machine of Figure 1;
- Figure 3 is a schematic front elevation view, with some parts transparent, of a detail of the joining machine of the preceding drawings;
- Figure 4 is a schematic side elevation view of operational aspects of the use of the joining machine according to the invention;
- Figure 5 is a scaled-up schematic view of a detail of Figure 4.

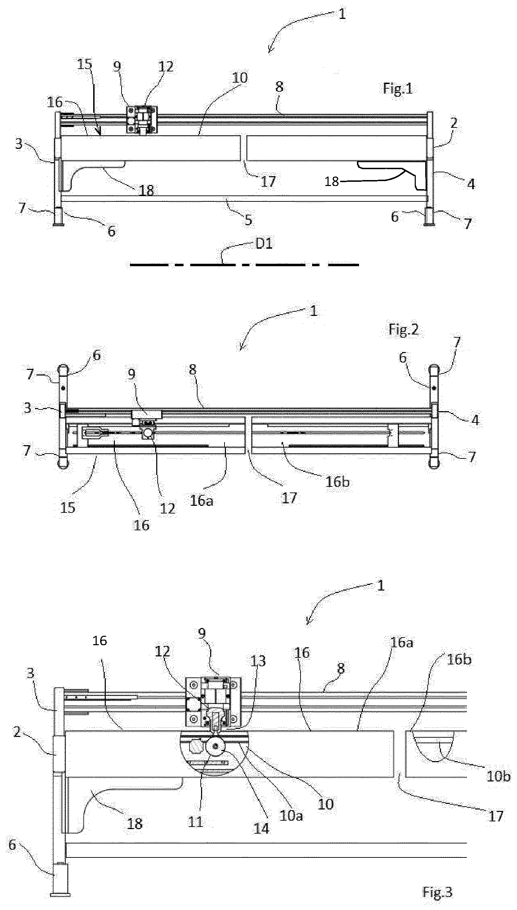

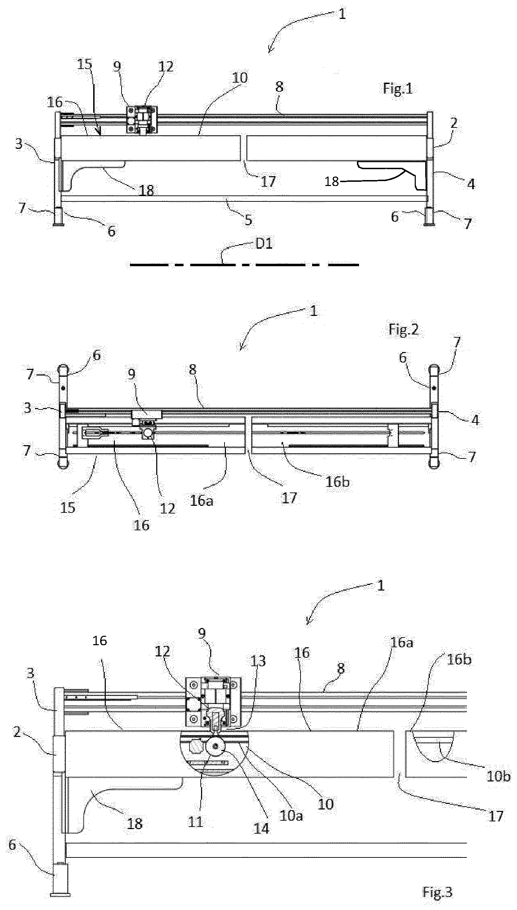

With reference to Figure 1, the numeral 1 denotes in its entirety a machine for joining pieces of fabric made in accordance with the invention.

The joining machine 1 comprises a frame 2.

With reference to Figure 1, the frame 2 comprises two side uprights 3, 4 and a crosspiece 5 connecting the two above-mentioned uprights 3, 4.

The crosspiece 5 extends longitudinally along a first predetermined direction D1.

The frame 2 comprises a base 6.

The base 6 comprises horizontal projections 7 extending from opposite sides of each upright 3, 4 at their lower ends.

Again with reference to Figure 1, the joining machine 1 comprises an upper track 8, supported by the frame 2 and extending longitudinally along the above-mentioned first predetermined direction D1.

In the preferred embodiment illustrated in the accompanying drawings, the joining machine 1 comprises an operating head 9 for joining the fabric, supported slidably by the above-mentioned upper track 8.

The joining machine 1 also comprises a lower track 10, which is also supported by the frame 2 and extending longitudinally according to the above-mentioned first predetermined direction D1.

The lower track 10 therefore extends parallel to the above-mentioned upper track 8.

As illustrated in Figure 3, the joining machine 1 comprises a contact element 11 for the operating head 9.

The contact element 11 is slidably supported by the lower track 10.

The contact element 11 is basically defined by a sort of carriage slidable along the lower track 10.

The contact element 11 moves along the lower track 10 in the same direction as the operating head 9 which slides on the upper track 8, so as to always maintain a contact configuration of the operating head 9. According to the embodiment illustrated, the operating head 9 comprises a heat sealing device 12, expressly dedicated to the joining of fabrics containing heat-sealable yarns, that is to say, at least partly made of plastic material.

More specifically, the heat sealing device 12 comprises a sonotrode 13 whilst the contact element 11 supports a contrast wheel 14, opposite the sonotrode 13 with the two flaps of fabric to be joined interposed between them.

According to alternative embodiments not illustrated but falling within the scope of the invention, the operating head 9 comprises a sewing unit of the traditional type.

Depending on the type of operating head 9 used, the contact element 11 adopts the appropriate configuration and shape, of substantially known type and not described in further detail.

With reference to the accompanying drawings, the joining machine 1 comprises means 15 for supporting and retaining the flaps of fabric to be joined.

The supporting and retaining means 15 extend longitudinally parallel to the above-mentioned upper and lower tracks 8, 10.

The supporting and retaining means 15 advantageously comprise a substantially flat and smooth plate 16 designed to support the fabric in a planar arrangement and to allow an easy sliding of the fabric on its upper surface.

The supporting and retaining means 15 also comprise, not illustrated, elements for gripping the fabric configured for stably retaining in position the flaps of fabric to be joined during the joining step.

Purely by way of an example, the above-mentioned and not illustrated gripping elements are of the gripper type.

Alternative embodiments of the above-mentioned and not illustrated gripping elements comprise magnetic elements.

As illustrated in Figures 1 to 3, the lower track 10 and the supporting and retaining means 15 have a gap 17 in their longitudinal extension, the gap 17 being configured, as will also be described in more detail below, to allow the passing through of the fabric during joining.

In other words, the assembly consisting of the lower track 10 and the supporting and retaining means 15 has a structural discontinuity, defined by the above-mentioned gap, designed to allow the physical passage inside it of a portion of fabric.

The gap 17 divides the lower track 10 into two portions, respectively 10a and 10b, adjacent to each other apart from the gap 17.

Similarly, the plate 16 of the supporting and retaining means 15 is also divided into two portions 16a, 16b adjacent to each other apart from the gap 17.

The expression "apart from the gap 17" means the fact that the two portions 16a, 16b are adjacent to each other without considering the discontinuity constituted by the gap 17. In other words, it means that the two portions 16a, 16b would in reality be physically adjacent if there were not the gap 17 but which are in any case to be considered adjacent.

The two portions 10a, 10b of the lower track 10 are respectively integral with the two portions 16a, 16b of the plate 16 and are supported in a cantilever fashion in pairs by a respective upright 3, 4.

Advantageously, in order to guarantee a good rigidity for the assembly consisting of the two portions 10a, 16a and 10b, 16b in a cantilever fashion of the lower track 10 and the plate 16, the frame 2 comprises two brackets 18 each stably connected to a respective upright 3, 4.

With reference to the accompanying drawings, the operating head 9 and the contact element 11 are mechanically separate from each other.

In other words, between the operating head 9 and the contact element 11 there is no rigid connection which makes it physically integral.

For the correct execution of the joining of the flaps of fabric it is essential that, during the sliding along the respective tracks 8, 10, the operating head 9 and the contact element 11 are kept in the same reciprocal position.

For this purpose, the joining machine 1 comprises means for coordinated and synchronous movement of the above-mentioned operating head 9 and contact element 11.

In short, the above-mentioned and not illustrated coordinated and synchronous movement means replace a rigid connection between the operating head 9 and the contact element 11.

According to the embodiment illustrated in the accompanying drawings, wherein the operating head 9 slides on the upper track 8 and the contact element 11 slides along the lower track 10, the above-mentioned and not illustrated coordinated and synchronous movement means comprise a motor for actuating the contact element 11, for moving the latter along the lower track 10.

The above-mentioned and not illustrated coordinated and synchronous movement means also comprise a computerised command and control unit configured for actuating the above-mentioned motor for driving the contact element 11 in such a way as to move together simultaneously the contact element 11 and the operating head 9.

For this purpose, the above-mentioned and not illustrated coordinated and synchronous movement means comprise a motor for driving the operating head 9. Alternatively, the operating head 9 is moved manually by the operator.

The above-mentioned and not illustrated coordinated and synchronous movement means are configured for moving in a synchronised fashion the operating head 9 and the contact element 11 even without their physical connection. In other words, the coordinated and synchronous movement means actuate in a synchronised fashion the operating head 9 and the contact element 11 either moving the two respective motors, if present, or detecting, for example by means of an encoder, the movement of the operating head 9 moved manually by the operator and consequently activating the motor for driving the contact element 11.

Again with reference to the embodiment illustrated in the accompanying drawings, the lower track 10 has, along its longitudinal extension, a respective rack, not illustrated.

The coordinated and synchronous movement means comprise, positioned on the above-mentioned contact element 11, a gear comprising a plurality of gear wheels designed to mesh with the above-mentioned and not illustrated rack, the gear being configured to always keep engaged with the rack at least one gear wheel, even when passing through the gap 17. Advantageously, according to a preferred embodiment, the above-mentioned gear is driven by the above-mentioned drive motor.

In use, the machine 1 for joining fabrics is alongside a station, not illustrated, for accumulating fabrics, normally wrapped in rolls and which must be joined together for subsequent processing.

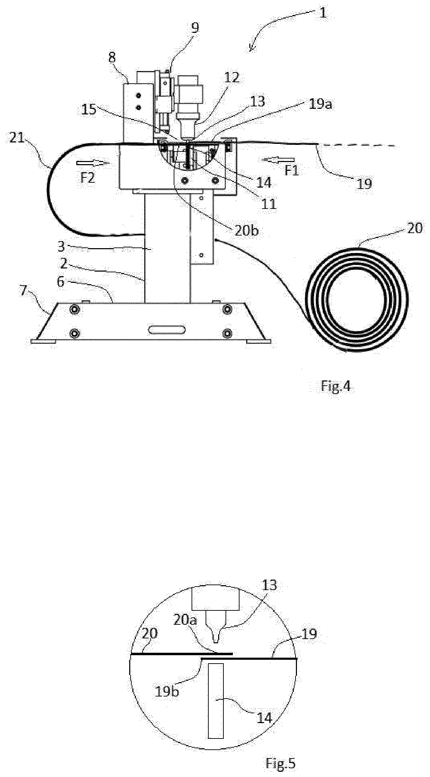

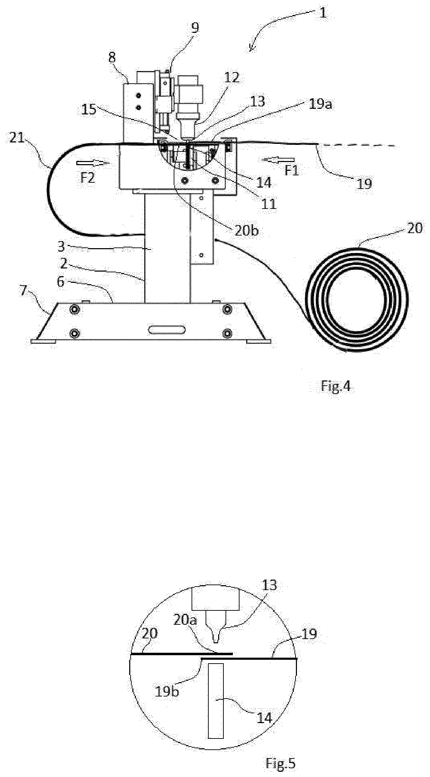

More specifically, with reference to Figure 4, the joining machine 1 is used for joining a final end flap 19b of a first piece 19 of fabric to an initial end flap 20a of a second piece 20 of fabric.

The pieces 19, 20 of fabric are advantageously located on the same side of the joining machine 1, in such a way as to simplify their storage. With reference to Figure 4, both the pieces 19, 20 are substantially on the righthand side of the machine 1.

When the first piece 19 is close to finishing, the operator grips its final end flap 19b and positions it on the plate 16 of the supporting and retaining means 15.

At the same time, the operator grips the initial end flap 20a of the second piece 20 and superposes it on the final end edge 19b, on the plate 16, taking care to make it pass from the opposite side of the machine 1, after passing through a loop 21.

In other words, again with reference to Figure 4, whilst the final end flap 19b of the first piece 19 reaches the plate 16 in the direction indicated by the arrow F1, the initial end flap 20a of the second piece 20 reaches the plate 16 coming from the opposite side, that is to say, in the direction of the arrow F2.

For this purpose, in order for the flaps 19b, 20a to extend in a planar fashion on the plate 16, the longitudinal extension of the latter should be greater than the transversal dimension of the fabric of the pieces 19, 20.

The distance between the uprights 3, 4 is also advantageously greater than the transversal dimension of the fabric of the pieces 19, 20.

As shown in detail in Figure 5, the two final end flaps 19b, 20a of the two first and second pieces 19, 20 are fixed stably, superposed in a plane on each other, to the plate 16 by the above-mentioned and not illustrated gripping elements.

The operating head 9 is therefore activated which, together with its contact element 11, joins the two flaps 19b, 20a which are superposed on each other.

In the preferred embodiment illustrated, the joining is of the heat-sealed type, obtained by means of an ultrasound device.

A similar result, for the purposes of the invention, would have been obtained with a traditional type thread sewing machine.

The choice of the type of joint is clearly dependent on the characteristics of the fabric to be joined.

Once the joining has been performed, the two flaps 19b, 20a, which have already been made integral with each other, are disengaged from the above-mentioned and not illustrated gripping elements and raised by the plate 16.

The operator will then pass the fabric of the second piece 20 which forms in practice the loop 21, through the above-mentioned gap 17, thereby unwinding the loop 21 and arranging all the fabric of the second piece 20 on the same side of the machine 1, that is to say, with reference to Figure 4, the right side of the machine.

The gap 17 defines, in short, a structural discontinuity such as to allow the passage of the fabric of the second roll which, therefore, after being passed through to the rear of the machine adopts its front starting position.

In other words, thanks to the physical discontinuity defined by the gap 17 it is possible to pass through it only and rapidly the quantity of fabric of the second piece which was on the left-hand side of the machine 1 during the joining step.

With reference to Figure 4, right and left sides of the joining machine 1 are indicated which then correspond, respectively, to the front and rear part of the machine 1, the latter classification referring to the position adopted by the operator acting on the machine 1.

According to an alternative embodiment not illustrated, the operating head 9 slides on the lower track 10 and the contact element 11 slides on the upper track 8. In this configuration not illustrated, the coordinated and synchronous movement means comprise, positioned on the above-mentioned operating head 9, a gear comprising a plurality of gear wheels designed to mesh with the above-mentioned and not illustrated rack, the gear being configured to keep always meshed with the rack at least one gear wheel, even when passing through the gap 17. In other words, according to the above-mentioned and not illustrated alternative embodiment, the reciprocal positions of the operating head 9 and contact elements 11 are reversed (relative to the embodiment illustrated in the accompanying drawings), without this modifying in substance the operation of the machine 1.

The solution according to the invention achieves the preset aims and brings important advantages.

A first advantage linked to the machine for joining fabrics according to the invention is due to the possibility of making flat joints superposed on the end flaps.

A further and linked advantage is due to the possibility of making the planar joint without having to position the pieces of fabric in question from two separate parts of the machine, thereby simplifying the operations for moving the fabric.

Thanks to the presence of the gap in the lower track and in the plate, flaps to be joined are supported; in fact it is possible for the operator to pass a limited portion of fabric through the gap to restore an optimum arrangement of the pieces: both on the same side of the joining machine.

## Claims

1. A machine for joining fabrics for joining a final end flap (19b) of a first piece (19) of fabric to an initial end flap (20a) of a second piece (20) of fabric, comprising:
- a frame (2),
- an upper track (8) supported by said frame (2), said upper track (8) extending longitudinally along a first predetermined line (D1),
- a lower track (10) supported by said frame (2) and extending parallel to said upper track (8),
- an operational joining head (9) slidably supported by a first of said upper track (8) and lower track (10),
- a contact element (11) of said operating head (9), acting in conjunction with it to determine the joining of said end flaps (19b, 20a), said contact element (11) being slidably supported by the other of said upper track (8) and lower track (10),
- means (15) for supporting and retaining said two end flaps (19b, 20a) to be joined, said supporting and retaining means (15) extending longitudinally parallel to said upper and lower tracks (8, 10), **characterised in that** said lower track (10) and said supporting and retaining means (15) have a gap (17) in their longitudinal extension, said gap (17) being configured to allow the passage through of fabric of at least one of said pieces (19, 20).

2. The joining machine according to claim 1, wherein said frame (2) comprises two side uprights (3, 4) connected to each other by at least one horizontal crosspiece (5) extending in said first predetermined direction (D1), **characterised in that** said lower track (10) comprises two portions (10a, 10b), adjacent to each other apart from said gap (17), and each supported in a cantilever fashion by a respective upright (3, 4).

3. The joining machine according to claim 1 or 2, **characterised in that** said operating head (9) and said contact element (11) are mechanically separate from each other.

4. The joining machine according to claim 3, **characterised in that** it comprises means for coordinated and synchronous movement of said operating head (9) and contact element (11).

5. The joining machine according to claim 4, **characterised in that** said coordinated and synchronous movement means comprise at least one motor for driving the one between said operating head (9) and contact element (11) which slidably engages on said lower track (10), and a computerised command and control unit configured to drive said motor in such a way as to make said contact element (11) and said operating head (9) move relative to each other during the joining of said end flaps (19b, 20a).

6. The joining machine according to claim 4, wherein said lower track (10) has, along the relative longitudinal extension, a respective rack, **characterised in that** said coordinated and synchronous movement means comprise, positioned in the one between said operating head (9) and contact element (11) which slidably engages on said lower track (10), a gear comprising a plurality of gear wheels designed to mesh with said rack, said gear being configured to always keep engaged with said rack at least one gear wheel, even when passing through said gap (17).
